# EUROPEAN PATENT APPLICATION

(11) **EP 4 671 730 A1**
(43) Date of publication of application: **31.12.2025**
(21) Application number: 24888880.2
(22) Date of filing: 10.07.2024
(51) Int. Cl.: G01N 3/08, G01N 3/04, H01M 10/42, H01M 50/502

(54) **DUMMY ASSEMBLY**

(30) Priority: 08.11.2023 KR 20230153864
(71) Applicant: LG Energy Solution Ltd., Seoul 07335 (KR)
(72) Inventor: CHOI, Sunghyun, Daejeon 34122 (KR); HAM, Jiwon, Daejeon 34122 (KR)
(74) Representative: Plasseraud IP
(86) International application number: PCT/KR2024/009840
(87) International publication number: WO 2025/100683

(57) **Abstract**

The present application can provide a dummy assembly comprising: a first body part on which a first busbar assembly, including a first lead tab dummy and a first busbar of which at least a portion is welded to the first lead tab dummy, is mounted; a second body part on which a second busbar assembly, including a second lead tab dummy and a second busbar of which at least a portion is welded to the second lead tab dummy, is mounted; and a distance adjustment part for adjusting the distance between the first body part and the second body part.

## Description

### CROSS-REFERENCE TO RELATED APPLICATIONS

This application is a 371 National Stage entry of PCT/KR2024/009840, filed on July 10, 2024, which claims the benefit of foreign priority to Korean Patent Application No. 10-2023-0153864, filed on November 8, 2023, in the Republic of Korea, the disclosures of which are incorporated by reference herein.

### TECHNICIAL FIELD

The present disclosure relates to a dummy assembly applicable to the field of batteries.

### BACKGROUND

Recently, demand for a mobile device such as a smartphone, a tablet personal computer (PC), and wireless earphones is increasing. In addition, with full-scale development of an electric vehicle, a storage battery, a robot, and a satellite, a highperformance secondary battery for repeated charging and discharging is actively researched currently.

A secondary battery in current daily use includes a nickel-cadmium battery, a nickel-hydrogen battery, a nickel-zinc battery, and a lithium secondary battery. Particularly, since memory effect hardly occurs when compared to a nickel-based secondary battery, the lithium secondary battery may be freely charged and discharged, has a greatly low self-discharging rate, and has a high energy density.

Meanwhile, the secondary battery may include a plurality of battery cells in order to generate high-output electrical energy, and the plurality of battery cells may be electrically connected in series or parallel. Here, electrical connection of the battery cells may be implemented by welding a lead tab and a busbar of a battery cell.

Since the high-output electrical energy may be generated through the electrical connection of the battery cells, evaluating whether a weld between the lead tab and the busbar of the battery cell is abnormal is important. In order to evaluate whether the weld is abnormal, a scheme of inspecting weld strength between the lead tab and the busbar of the battery cell may be used, and generally, the weld strength may be inspected by measuring tensile strength of a welded region between the lead tab and the busbar.

However, a large amount of waste are generated as the battery cell and the busbar are discarded after the weld strength is inspected as described above. To improve such a situation, a dummy module for inspecting the weld strength has been used.

As a field to which the secondary battery is applied is widened, a difference between standards for the secondary battery or the like required in each field has been present, and a dummy module corresponding to each standard may have been additionally manufactured to cope with the standards for the secondary battery or the like required in each field.

### SUMMARY

### Technical Goals

The present disclosure may provide a dummy assembly that may provide an environment for inspecting weld strength similar to that of an actual product and minimize waste generated in inspection of the weld strength. In addition, the present disclosure may provide a dummy assembly that may flexibly cope with a difference between standards required for each product.

### Technical solutions

According to an example aspect, there is provided a dummy assembly for inspecting weld strength between a lead tab and a busbar of a battery cell.

The dummy assembly includes a first body part to which a first lead tab dummy and a first busbar assembly are mounted, the first busbar assembly including a first busbar, at least a portion of the first busbar provided to be welded to the first lead tab dummy, a second body part to which a second lead tab dummy and a second busbar assembly are mounted, the second busbar assembly including a second busbar, at least a portion of the second busbar provided to be welded to the second lead tab dummy, and a distance adjustment part configured to adjust a distance between the first body part and the second body part.

The distance adjustment part may include a driving part configured to move the first body part or the second body part.

The driving part may include a first driving member connected with the first body part, a second driving member connected with the second body part, and a rotation member connected with the first driving member and the second driving member and provided to rotate.

The rotation member may be mutually fixed to the first driving member and the second driving member, the first driving member may be fastened to the first body part in a rotatable manner, and the second driving member may be fastened to the second body part in a rotatable and translationally movable manner.

The first driving member and the second driving member may be formed as a single shaft.

A protruding rib may be formed to the first driving member, and a screw thread may be formed to the second driving member.

The first body part may include a first body connection member provided to face one surface on which the first busbar assembly is mounted, the second body part may include a second body connection member provided to face one surface on which the second busbar assembly is mounted, and the first body connection member and the second body connection member may face each other.

The distance adjustment part may further include a guide part configured to guide movement by the driving part.

The first body part may include a first body connection member provided to face one surface on which the first busbar assembly is mounted, the second body part may include a second body connection member provided to face one surface on which the second busbar assembly is mounted, and the distance adjustment part may be connected with the first body connection member and the second body connection member.

The distance adjustment part may include a plurality of guide parts, and the driving part may be provided between the plurality of guide parts.

The first body part may include a first body hole provided so that the first lead tab dummy is mounted, and the second body part may include a second body hole provided so that the second lead tab dummy is mounted.

The first body part may include a first body fixation part provided so that the first busbar assembly is mounted, the second body part may include a second body fixation part provided so that the second busbar assembly is mounted, the first busbar assembly may further include a first busbar assembly fixation part provided to be coupled to or uncoupled from the first body fixation part, and the second busbar assembly may further include a second busbar assembly fixation part provided to be coupled to or uncoupled from the second body fixation part.

The first busbar assembly may include a first busbar frame of which the first busbar assembly fixation part is provided at one side and that is configured to support the first busbar, the second busbar assembly may include a second busbar frame of which the second busbar assembly fixation part is provided at one side and that is configured to support the second busbar, the first busbar frame may include a first groove guide part on at least one side, and the second busbar frame may include a second groove guide part on at least one side.

The dummy assembly may further include a position fixation part configured to maintain a distance between the first body part and the second body part, and as being penetrated by a fixation member, the position fixation part may be coupled to the first body part and the second body part.

The position fixation part includes a body member, and a plurality of fixation holes that is penetration holes provided to the body member, a portion of the plurality of fixation holes may be a first fixation hole provided to be coupled to the first body part, and another portion of the plurality of fixation holes may be a second fixation hole provided to be coupled to the second body part.

The first body part may include a first groove part provided at one side end, the second body part may include a second groove part provided at one side end and facing the first groove part, and the position fixation part may be seated on the first groove part and the second groove part.

The distance adjustment part may be configured to move at least one of the first body part or the second body part, and at least one of the first groove part and the second groove part on which the position fixation part is seated may include an extended space extended further in a direction in which the first body part or the second body part has moved.

The fixation member may be present as a plurality of fixation members, a portion of the plurality of fixation members may be configured to penetrate the first fixation hole and coupled to a first coupling hole provided to the first groove part, and another portion may be configured to penetrate the second fixation hole and coupled to a second coupling hole provided to the second groove part.

At least a portion of the plurality of fixation holes may be a buffer hole, and the buffer hole may include a buffer space provided so that a portion of the fixation member which penetrates the position fixation part and is semi-coupled to the first body part and the second body part is to move.

The distance adjustment part may be configured to move at least one of the first body part or the second body part, and the buffer space may be provided so that the portion of the semi-coupled fixation member is to move in a direction in which the first body part or the second body part has moved.

### Effects

According to the present disclosure, it is possible to provide an environment for inspecting weld strength similar to that of an actual product and minimize waste generated in inspection of the weld strength. In addition, according to the present disclosure, it is possible to flexibly cope with a difference between standards required for each product. According to the present disclosure, it is possible to flexibly cope with an equipment tolerance of a plurality of lines manufacturing identical products.

### BRIEF DESCRIPTION OF THE DRAWINGS

Drawings shown in the present disclosure is in accordance with exemplary aspects of the present disclosure. A ratio of a width, breadth, or a thickness (or a height) of each element is to describe the present disclosure in detail, and the ratio may be differ from an actual ratio. In addition, each axis in a coordinate system illustrated in the drawings may be perpendicular to another. An arrow may point in a positive direction, and a direction exactly opposite to (e.g., a direction rotated through 180 degrees from) the direction of the arrow may be a negative direction.
FIG. 1 illustrates at least a portion of a dummy assembly according to an example aspect of the present disclosure.
FIG. 2 is a perspective diagram illustrating at least a portion of a dummy assembly according to an example aspect of the present disclosure.
FIG. 3, FIG. 4, and FIG. 5 are exploded perspective diagrams illustrating at least a portion of a dummy assembly according to an example aspect of the present disclosure.
FIG. 6 is a perspective diagram illustrating at least a portion of a dummy assembly according to an example aspect of the present disclosure.
FIG. 7 is an exploded perspective diagram illustrating at least a portion of a dummy assembly according to an example aspect of the present disclosure.
FIG. 8 is an enlargement of a portion of a dummy assembly according to an example aspect of the present disclosure.
FIG. 9 is a plan diagram illustrating at least a portion of a position fixation part according to an example aspect of the present disclosure.
FIG. 10 is an exploded diagram in which a position fixation part is separated from a dummy assembly according to an example aspect of the present disclosure and illustrated.
FIG. 11 is an enlargement of a portion of a dummy assembly according to an example aspect of the present disclosure.

### DETAILED DESCRIPTION

Reference characters used in the present disclosure are as follows.

| | | | |
|---|---|---|---|
| 10 | Dummy assembly | 100 | Body part |
| 110 | First body part | 111 | First body connection member |
| 112 | First body fixation part | 113 | First body hole |
| 114 | First groove part | 115 | First coupling hole |
| 120 | Second body part | 121 | Second body connection member |
| 122 | Second body fixation part | 123 | Second body hole |
| 124 | Second groove part | 125 | Second coupling hole |
| 200 | Busbar assembly | 210 | First busbar assembly |
| 211 | First busbar | 211h | First busbar penetration hole |
| 212 | First busbar frame | 212h | First groove guide part |
| 213 | First busbar assembly fixation part | 221 | Second busbar |
| 221h | Second busbar penetration hole | 222 | Second busbar frame |
| 223 | Second busbar assembly fixation part | 222h | Second groove guide part |
| 300 | Distance adjustment part | 310 | Driving part |
| 311 | First driving member | 312 | Second driving member |
| 313 | Rotation member | 320 | Guide part |
| 400 | Position fixation part | 410 | Body member |
| 420 | Fixation hole | 421 | First fixation hole |
| 422 | Second fixation hole | 423 | Buffer hole |
| 423s | Buffer space | 510 | First lead tab dummy |
| 520 | Second lead tab dummy | 600 | Fixation member |
| E | Extended space | | |

Before the present disclosure is described, terms or words used in the present disclosure and the accompanying claims are not to be limited to general definitions or dictionary definitions. The terms and words are to be construed under a principle that an inventor may appropriately define a concept of a term in order to describe it in the best way. Exemplary aspects described in the present disclosure and configurations illustrated in the accompanying drawings are merely most desirable exemplary aspects and do not represent all of the technical spirit of the present disclosure. Thus, it should be understood that various equivalents and modifications that may replace the exemplary aspects and configurations may be present at the time of filing the application of the present disclosure.

The same reference numerals or symbols illustrated in the accompanying drawings represent components or elements performing substantially identical functions. For convenience for description and understanding, exemplary aspects different from each other may be described with the same reference numerals or symbols. In other words, although a plurality of drawings illustrates elements having the same reference numeral, the plurality of drawings does not mean only one example aspect.

In the following descriptions, terms in a singular form include terms in a plural form unless an apparently and contextually conflicting description is present. Terms such as "including" or "comprising" is to indicate that a feature, a number, an operation, an action, an element, a component, or a combination thereof is present. It should be understood that the terms are not to exclude in advance a possibility that one or more other features, numbers, operations, actions, elements, components, or combinations thereof may be present or added.

In addition, it should be noted in advance that an expression such as an upper side, an upper portion, a lower side, a lower portion, a side surface, a front surface, or a rear surface is based on directions illustrated in the drawings and that the expression may be changed when a direction of a corresponding object is changed.

Terms including an ordinal number such as "first" or "second" used in the present specification and claims may be used to distinguish elements. Such an ordinal number is used to contextually distinguish identical or similar elements from each other. Meanings of the terms may not be limited by use of the ordinal number. For example, a use order, a disposition order, or the like of elements with such an ordinal number may not be limitedly construed by the number. As required, ordinal numbers may be substituted with each other.

Hereinafter, the exemplary aspects of the present disclosure will be described with reference to the accompanying drawings. However, the idea of the present disclosure is not limited by the proposed exemplary aspects. For example, those skilled in the art who understand the idea of the present disclosure may propose another example aspect included in the scope of the idea of the present disclosure through addition, change, removal, or the like of an element. However, the other example aspect is also included in the scope of the idea of the present disclosure. Shapes, sizes, or the like of elements in the drawings may be exaggerated for clearer description.

In the present disclosure, a battery and a cell may be an identical meaning. In addition, the battery or the cell may be a term wholly referring to a battery cell and a battery module or battery pack including the battery cell, which are a unit of the battery or the cell.

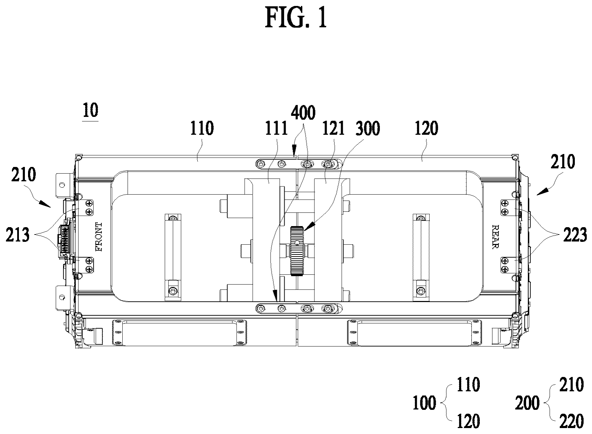

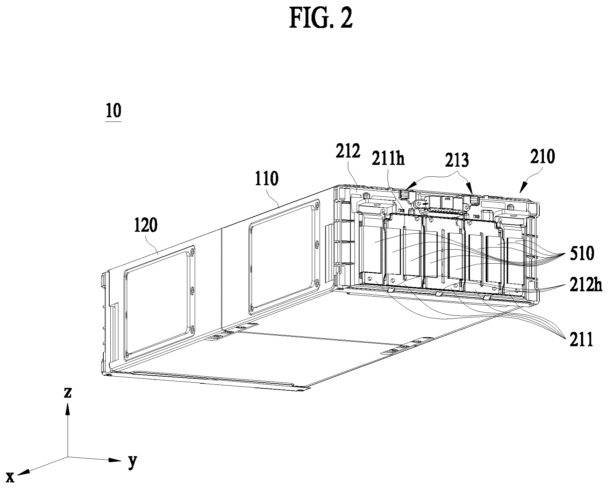

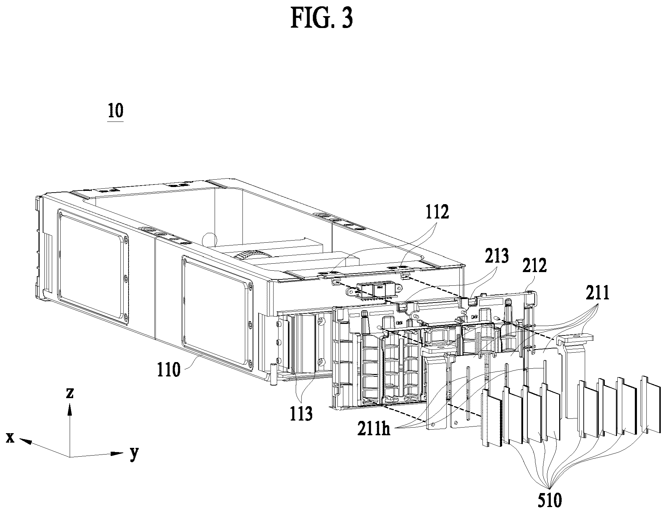

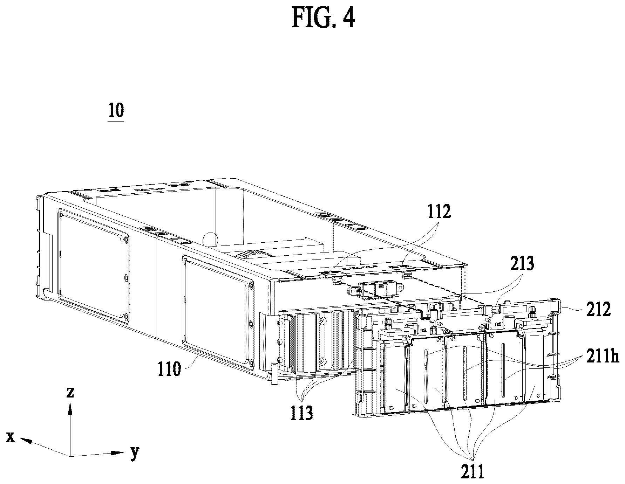

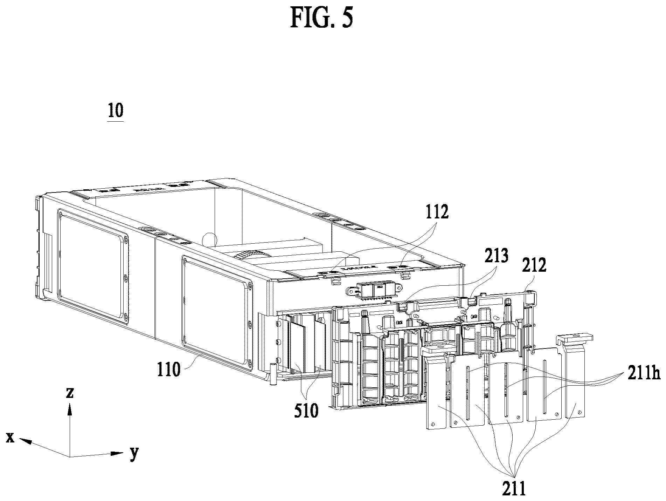

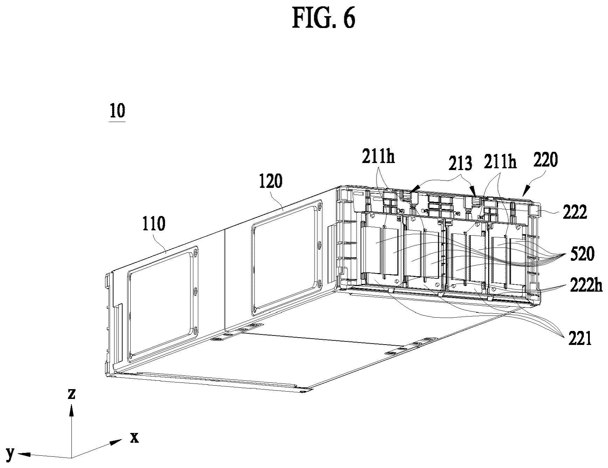

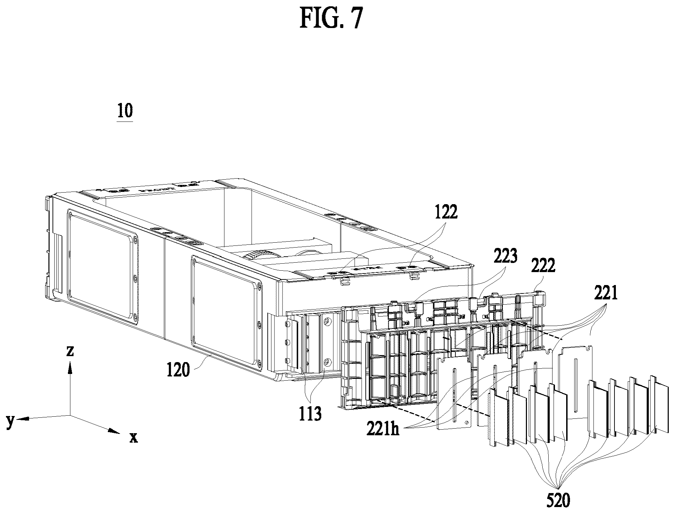

FIG. 1 illustrates at least a portion of a dummy assembly 10 according to an example aspect of the present disclosure. FIG. 2 is a perspective diagram illustrating at least a portion of the dummy assembly 10 according to an example aspect of the present disclosure. FIGS. 3 through 5 are exploded perspective diagrams illustrating at least a portion of the dummy assembly 10 according to an example aspect of the present disclosure. FIG. 6 is a perspective diagram illustrating at least a portion of the dummy assembly 10 according to an example aspect of the present disclosure. FIG. 7 is an exploded perspective diagram illustrating at least a portion of the dummy assembly 10 according to an example aspect of the present disclosure.

The present disclosure may provide the dummy assembly 10 which may provide an environment for inspecting weld strength similar to that of an actual product and minimize waste generated in inspection of the weld strength. In addition, the present disclosure may provide the dummy assembly 10 which may cope with a difference between standards required for each product.

The dummy assembly 10 according to an example aspect of the present disclosure may be for inspection of weld strength between a lead tab and a busbar of a battery cell. Specifically, the dummy assembly 10 may be for identifying whether a weld between the lead tab and the busbar of the battery cell is abnormal. The dummy assembly 10 may be formed in a shape of a dummy having a structure and a size similar to that of an actually applied product (e.g., a battery module).

Referring to FIG. 1, the dummy assembly 10 according to an example aspect of the present disclosure may include a body part 100. Also, the body part 100 may include a first body part 110 and a second body part 120. Each of the first body part 100 and the second body part 120 may have a housing shape of which at least one side is opened.

The dummy assembly 10 according to an example aspect of the present disclosure may include the first body part 110 and the second body part 120. The first body part 110 and the second body part 120 may be provided in a structure in which each is symmetrical to another.

Referring to FIGS. 2 through 7, in the dummy assembly 10 according to an example aspect of the present disclosure, a lead tab dummy and a busbar assembly 200 may be mounted to the body part 100.

The body part 100 may include body holes 113 and 123 provided so that the lead tab dummy is mounted. A depth that allows the lead tab dummy to be inserted and appropriately fixed may suffice for the body holes 113 and 123, and the body holes 113 and 123 may be or not be penetrated.

The body part 100 may include body fixation parts 112 and 122 provided so that the busbar assembly 200 is mounted. The body fixation parts 112 and 122 may be connected with busbar assembly fixation parts 213 and 223 provided to the busbar assembly 200, and the busbar assembly 200 may be fixed to the body part 100 due to such connection.

In the dummy assembly 10 according to an example aspect of the present disclosure, the lead tab dummy may be present as one lead tab dummy or a plurality of lead tab dummies. The number of the lead tab dummies may be determined according to the number of lead tabs of the battery cell in a designed product. Also, the number of the body holes 113 and 123 of the body part 100 may be provided to be greater than or equal to a predetermined number of the lead tab dummies.

Hereinafter, the dummy assembly 10 according to an example aspect of the present disclosure will be described in detail by focusing on the first body part 110 and the second body part 120 each. Furthermore, the first body part will be mainly described below, but a description of the first body part 110 may be referenced for all elements of the second body part 120, which individually corresponds to elements of the first body part 110.

FIGS. 2 through 5 are diagrams illustrating each element of the first body part 110, and FIGS. 6 and 7 are diagrams illustrating each element of the second body part 120. When only an ordinal number of each element is different, the description of the first body part 110 may be referenced for the second body part 120.

Specifically, unless additionally described or contradictory in the following description, the first body part 110 may regarded as the second body part 120. A first body connection member 111, a first body fixation part 112, a first body hole 113, a first groove part 114, and a first coupling hole 115 may be regarded as a second body connection member 121, a second body fixation part 122, a second body hole 123, a second groove part 124, and a second coupling hole 125, respectively. A first busbar assembly 210, a first busbar 211, a first busbar penetration hole 211h, a first busbar frame 212, a first groove guide part 212h, and a first busbar assembly fixation part 213 may be regarded as a second busbar assembly 220, a second busbar 221, a second busbar penetration hole 221h, a second busbar frame 222, a second groove guide part 222h, and a second busbar assembly fixation part 223, respectively.

Referring to FIGS. 2 through 5, in the dummy assembly 10 according to an example aspect of the present disclosure, a first lead tab dummy 510 and the first busbar assembly 210 may be mounted to the first body part 110. The first body part 110 may include the first body hole 113 which is provided so that the first lead tab dummy 510 is mounted. A depth that allow the first lead tab dummy 510 to be inserted and appropriately fixed may suffice for the first body hole 113, and the first body hole 113 may be or not be penetrated. In other words, the first body part 110 may include the first body hole 113 which is provided so that at least a portion of the first lead tab dummy 510 is inserted.

Referring to FIG. 1, in the dummy assembly 10 according to an example aspect of the present disclosure, the first body part 110 may include the first body connection member 111 which is provided to face one surface on which the first busbar assembly 210 is to be mounted. The first body connection member 111 may cover at least a portion of some surfaces among opened surfaces of the first body part 110.

Referring to FIG. 1, the first body connection member 111 and the second body connection member 121 may face each other. That is, the first body part 110 and the second body part 120 may be provided in the structure in which each is symmetrical to another so that the first body connection member 111 and the second body connection member 121.

Referring to FIGS. 3 through 5, in the dummy assembly 10 according to an example aspect of the present disclosure, the first body part 110 may include the first body fixation part 112 which is provided so that the first busbar assembly 210 is mounted. The first body fixation part 112 may be connected with the first busbar assembly fixation part 213 which is provided to the first busbar assembly 210, and the first busbar assembly 210 may be fixed to the first body part 110 due to such connection. The first body fixation part 112 may be provided on at least one side surface of the first body part 110.

In another example, in the dummy assembly 10 according to an example aspect of the present disclosure, the first body fixation part 112 may be provided only at one side surface of the body part 110. In addition, the first body fixation part 112 may be provided, for example, at a position higher than the first body hole 113. In the present disclosure, a higher position may be a position of which a z-axis coordinate is positioned in a further positive direction, and a direction in which gravity is applied may be a negative direction of the z-axis coordinate. When the first body fixation part 112 is positioned at the position higher than the first body hole 113 as the first body fixation part 112 is provided only at the one side surface of the body part 110, the first body fixation part 112 and the first busbar assembly fixation part 213 may be further easily coupled or uncoupled.

The first busbar assembly fixation part 213 may be provided at one side of the busbar assembly 210. Also, the first busbar assembly 210 may include the first busbar assembly fixation part 213 which is provided to be coupled to or uncoupled from the first body fixation part 112.

The first body fixation part 112 may have a catch shape, and the first busbar assembly fixation part 213 may have a bar shape that may be caught on and coupled to the catch shape. The first body fixation part 112 and the first busbar assembly fixation part 213 in a coupled state may be uncoupled as the bar-shaped first busbar assembly fixation part 213 is separated from the catch-shaped first body fixation part 112 by external force. In other words, the first busbar assembly 210 may be coupled to or uncoupled from the first body part 110 in such a scheme. However, various schemes may be applied to coupling or uncoupling of the first body fixation part 112 and the first busbar assembly fixation part 213, and a scheme of the coupling or the uncoupling is not limited to the above-described scheme.

Meanwhile, when the first busbar assembly 210 is coupled to the first body part 110, the first lead tab dummy 510 which is mounted to the first body hole 113 may be allowed to be welded to the first busbar 211 which is provided to the first busbar assembly 210. As the first lead tab dummy 510 mounted to the first body hole 113 is provided to be weldable to the first busbar 211, the weld strength similar to that of the actual product may be inspected. When welding of the first lead tab dummy 510 and the first busbar 211 is ended, the first body part 110 and the first busbar assembly 210 may be uncoupled. With uncoupling, the first lead tab dummy 510 which is mounted to the first body hole 113 may be demounted from the first body hole 113. That is, the first busbar assembly 210 in which the first lead tab dummy 510 is welded to the first busbar 211 may be separated from the first body part 110, and the weld strength may be inspected through the separated first busbar assembly 210.

As described above, the first busbar assembly 210 may include the first busbar 211 which is provided to be welded together with the first lead tab dummy 510 at least a portion. The first busbar 211 may be present as one first busbar 211 or a plurality of first busbars 211. Also, the first busbar 211 may include the first busbar penetration hole 211h which is provided so that the first lead tab dummy 510 penetrates and may not include the first busbar penetration hole 211h in another example. When the first busbar 211 is present as the plurality of first busbars 211, at least a portion thereof may be a first busbar 211 including the first busbar penetration hole 211h, and at least another portion thereof may be a first busbar 211 not including the first busbar penetration hole 211h. Furthermore, when the first busbar 211 is present as the plurality of first busbars 211, at least a portion thereof may be or may not be connected to each other. The first lead tab dummy 510 may pass through the first busbar penetration hole 211h of the first busbar 211, pass through between one first busbar 211 and another first busbar 211, or pass through a side surface area of one first busbar 211. Disposing an appropriate number of the first busbars 211 so that the first lead tab dummy 510 is welded may suffice and may not particularly be limited. Meanwhile, the first lead tab dummy 510 and the first busbar 211 each may include a metal material. For example, the metal material may be aluminum, copper, or steel. In addition, the first lead tab dummy 510 and a second lead tab dummy 520 may include different metal material. For example, the first lead tab dummy 510 may include aluminum, and the second lead tab dummy 520 may include copper.

The first busbar assembly 210 may include the first busbar frame 212 which supports the first busbar 211. The first busbar frame 212 may support the first busbar 211 through a support means. For example, the first busbar frame 212 may provide a protrusion structure to correspond to an area in which the first busbar 211 is supported. The first busbar 211 may include a support penetration hole provided to be fit to the protrusion structure provided to the first busbar frame 212, and the support penetration hole of the first busbar 211 may be fit to the protrusion structure of the first busbar frame 212. The support means is not limited to the above-description and may be carried out in another different scheme.

The first busbar frame 212 may include a first busbar frame penetration hole provided to be penetrated by the first lead tab dummy 510. The first busbar frame penetration hole which is provided to the first busbar frame 212 may be positioned to correspond to the first body hole 113 which is provided to the first body part 110. In other words, the first lead tab dummy 510 mounted to the first body hole 113 may penetrate the first busbar frame 212 through the first busbar frame penetration hole. The first lead tab dummy 510 which penetrates the first busbar frame 212 may be in contact with and welded to the first busbar 211 supported by the first busbar frame 212. At least a portion of the first lead tab dummy 510 which penetrates the first busbar frame 212 may be bent so that the first lead tab dummy 510 is welded to the first busbar 211.

Referring to FIG. 2, the first busbar frame 212 may include the first groove guide part 212h at least one side. The first groove guide part 212h may be present as one first groove guide part 212h or a plurality of first groove guide parts 212h. The welding of the first lead tab dummy 510 and the first busbar 211 may be performed with a welding device. In order to perform the welding between the first lead tab dummy 510 and the first busbar 211, the welding device may approach in a direction toward a position of the first body part 110 while facing one surface of the first body part 110 on which the first busbar assembly 210 is mounted. Here, a portion of the welding device may be in contact with the first groove guide part 212h which is provided to the first busbar frame 212. When the welding device is in contact with the first groove guide part 212h, the welding device may be further accurately at a place at which the welding is to be performed, and a decrease in welding quality due to vibration or the like during the welding may be prevented.

Meanwhile, referring to FIG. 3, the first busbar assembly 210 may be mounted to the first body part 110. Specifically, the first busbar frame 212 of the first busbar assembly 210 may be fixed to the first body fixation part 112 which is provided to the first body part 110. Also, the first busbar 211 may be supported by the first busbar frame 212 through the support means. The first lead tab dummy 510 may be mounted to the first body hole 113 of the first body part 110 to which the first busbar assembly 210 is mounted. The first lead tab dummy 510 mounted to the first body hole 113 may be welded to the first busbar 211.

In addition, referring to FIGS. 3 through 5, the first lead tab dummy 510 may be mounted to the first body hole 113 of the first body part 110, and the first lead tab dummy 510 mounted to the first body hole 113 may penetrate the first busbar frame 212. The first lead tab dummy 510 penetrating the first busbar frame 212 may be welded to the first busbar 211 supported by the first busbar frame 212.

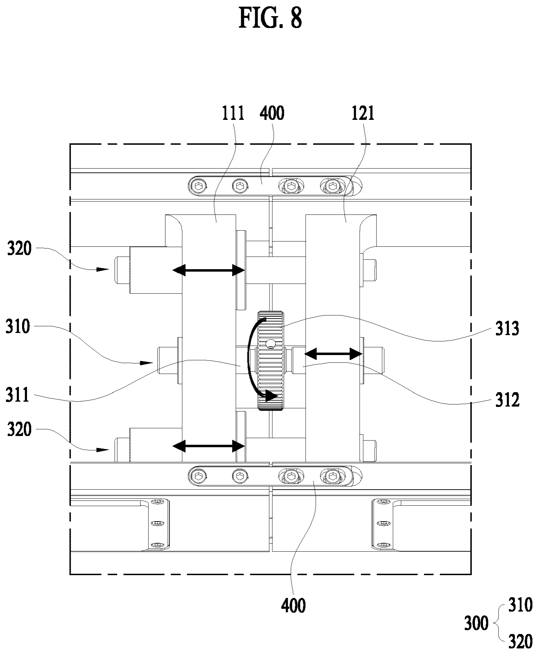

FIG. 8 is an enlargement of a portion of the dummy assembly 10 according to an example aspect of the present disclosure. Referring to FIGS. 1 and 8, the dummy assembly 10 according to an example of the present disclosure may include a distance adjustment part 300 that adjusts a distance between the first body part 110 and the second body part 120.

The distance adjustment part 300 may include a driving part 310 that moves the first body part 110 and the second body part 120. The driving part 310 may shorten the distance between the first body part 110 and the second body part 120 or space the first body part 110 and the second body part 120.

A scheme of the driving part 310 adjusting a gap between the first body part 110 and the second body part 120 may be a screw rotation scheme.

The driving part 310 of the screw rotation scheme may include a first driving member 311, a second driving member 312, and a rotation member 313.

The rotation member 313 may be an object directly gripped and adjusted by a worker. The driving part 313 may be fixed to each of the first driving member 311 and the second driving member 312. At this point, such fixation may be fixation of a relative position and direction, and ultimately, may be fixation in an integral form.

The first driving member 311 may be fastened to the first body connection member 111 of the first body part 110 in a rotatable manner. The second driving member 312 may be fastened to the second body connection member 121 of the second body part 120 in a rotatable and translationally movable manner. That is, the first body connection member 111 and the first driving member 311 may mutually rotate but be fixed in an x-axis direction, and the second body connection member 121 and the second driving member 312 may mutually rotate and relatively move in the x-axis direction simultaneously. The second body connection member 121 and the second driving member 312 may be coupled by screw coupling. In contrast, the first body connection member 111 and the first driving member 311 may be formed in a shape in which a ring-shaped protrusion rib is provided at one side and a recessed portion is provided at another side to correspond to the protrusion rib.

Alternately, the first driving member 311 may be fixed to the first body connection member 111 of the first body part 110. The second driving member 312 may be fixed to the second body connection member 121 of the second body part 120. An identical action may be implemented by relative motion (e.g., rotational motion) of the rotation member 313 and the first driving member 311 and relative motion (e.g., rotational and translational motion) of the rotation member 313 and the second driving member 312.

Each of the first driving member 311 and the second driving member 312 may have a shaft shape, and particularly, the above-described two elements may be formed as a single axis. As being formed in the shaft shape, two members 311 and 312 may be stably coupled to the first body part 110 and the second body part 120, and intuitional transfer of force is allowed.

However, this is merely one aspect. Coupling of two body parts 110 and 120 and the driving part 310 may be configured with another scheme. For example, the driving part 310 and the two body parts 110 and 120 may be coupled through a gear scheme or may be coupled and move through a hydraulic cylinder scheme.

Adjustment of the distance between the first body part 110 and the second body part 120 may allow coping with a difference between standards required in various products.

Referring to FIGS. 1 and 8, in the dummy assembly 10 according to an example of the present disclosure, the distance adjustment part 300 may include a guide part 320 that guides stable movement between the first body part 110 and the second body part 120 at a time of movement by the driving part 310. The guide part 320 may be connected with at least one or more of the first body connection member 111 and the second body connection member 121. In terms of further accurately guiding the movement by the driving part 310, the guide part 320 may be connected with all of the first body connection member 111 and the second body connection member 121.

The guide part 320 may be positioned so as not to interrupt an operation of the driving part 310. In addition, at least one or more of the first body connection member 111 and the second body connection member 121 may include a penetration hole provided to be penetrable by the guide part 320. The guide part 320 may penetrate the penetration hole provided to the at least one or more of the first body connection member 111 and the second body connection member 121. The guide part 320 may be provided, to a degree that the guide part 320 is not fixed and coupled to at least one or more of the first body connection member 111 and the second body connection member 121 and not separated from the penetration hole, so as not to interrupt the movement by the driving part 310.

The distance adjustment part 300 may include a plurality of guide parts 320. Also, the driving part 310 of the distance adjustment part 300 may be provided between the plurality of guide parts 320. A further proper movement guide may be provided through the plurality of guide parts 320, and a further stable movement guide may be provided by positioning the driving part 310 between the plurality of guide parts 320.

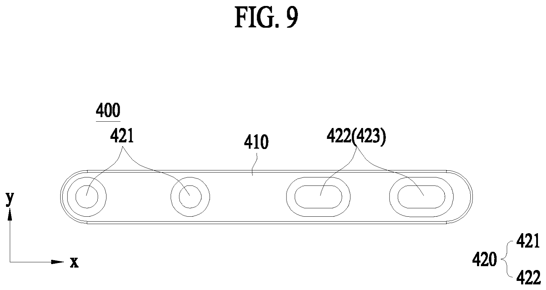

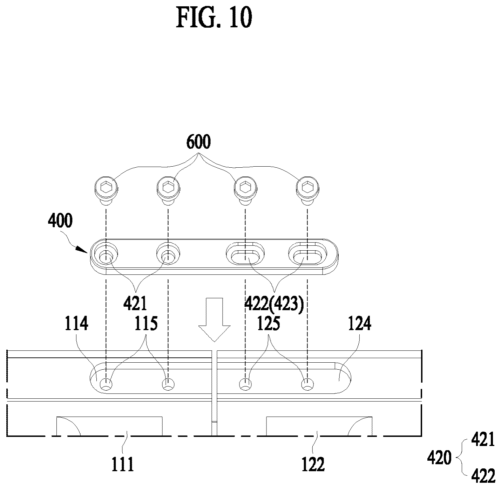

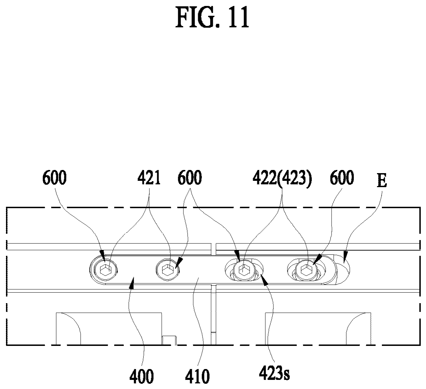

FIG. 9 is a plan (e.g., an XY-plane) diagram illustrating at least a portion of a position fixation part 400 according to an example aspect of the present disclosure. FIG. 10 is an exploded diagram in which the position fixation part 400 is separated from the dummy assembly 10 according to an example aspect of the present disclosure and illustrated. FIG. 11 is an enlargement of a portion of the dummy assembly 10 according to an example aspect of the present disclosure.

Referring to FIGS. 9 and 11, the dummy assembly 10 according to an example of the present disclosure may include the position fixation part 400 that maintains a distance between the first body part 110 and the second body part 120. The distance between the first body part 110 and the second body part 120 may be controlled to a desired degree through the distance adjustment part 300, and the position fixation part 400 may fix a position so that the first body part 110 and the second body part 120 do not move further so that the controlled distance is fixed. In addition, referring to FIG. 1, the position fixation part 400 may be present as a plurality of position fixation parts 400, and the first body part 110 and the second body part 120 may be further strongly fixed with the plurality of position fixation parts 400. Meanwhile, when the position fixation part 400 is coupled to the first body part 110 and the second body part 120, the distance adjustment part 300 may not further adjust the distance between the first body part 110 and the second body part 120.

In the dummy assembly 10 according to an example aspect of the present disclosure, as being penetrated by a fixation member 600, the position fixation part 400 may be coupled to the first body part 110 and the second body part 120. The fixation member 600 is not particularly limited as long as the fixation member 600 may couple the position fixation part 400 to the first body part 110 and the second body part 120, and may be, for example, a bolt or nut, a screw, a rivet, or the like. Also, the number of fixation members 600 may be determined in consideration of the number of fixation holes 420 that are penetration holes provided to the position fixation part 400. For example, the number of the fixation members 600 may be a plural number.

Referring to FIG. 9, the position fixation part 400 may include a body member 410 and a plurality of fixation holes 420 that are penetration holes provided to the body member 410. The fixation member 600 may penetrate the position fixation part 400 while passing through a fixation hole 420 that is a penetration hole. In the position fixation part 400, a portion of the plurality of fixation holes 420 may be a first fixation hole 421 provided to be coupled to the first body part 110, and another portion of the plurality of fixation holes 420 may be a second fixation hole 422 provided to be coupled to the second body part 1120. Four fixation holes 420 may be provided. Two of the four fixation holes 420 may be the first fixation hole 421 provided to be coupled to the first body part 110, and remaining two may be the second fixation hole 422 provided to be coupled to the second body part 120. In addition, the first fixation hole 421 may be provided as one first fixation hole 421 or a plurality of first fixation holes 421, and the second fixation hole 422 may be provided as one second fixation hole 422 or a plurality of second fixation holes 422. Also, when the first fixation hole 421 is present as the plurality of first fixation holes 421, and when the second fixation hole 422 is present as the one second fixation hole 422, the second fixation hole 422 may not be positioned between the first fixation holes 421. Also, when the first fixation hole 421 is present as the one first fixation hole 421, and when the second fixation hole 422 is present as the plurality of second fixation holes 422, the first fixation hole 421 may not be positioned between the second fixation holes 422. Also, when the first fixation hole 421 is present as the plurality of first fixation holes 421, and when the second fixation hole 422 is present as the plurality of second fixation holes 422, the first fixation hole 421 may not be positioned between the second fixation holes 422, and the second fixation hole 422 may not be positioned between the first fixation holes 421. That is, the first fixation hole 421 and the second fixation hole 422 may be provided to be spatially separated from each other. Furthermore, the first fixation hole 421 and the second fixation hole 422 may have a size that allows the fixation member 600 to pass through.

Referring to FIG. 10, in the dummy assembly 10 according to an example aspect of the present disclosure, the first body part 110 may include the first groove part 114 which is provided at one side end. In addition, the second body part 120 may include the second groove part 124 which is provided at one side end. Here, the first groove part 114 and the second groove part 124 may face each other. Also, the first groove part 114 and the second groove part 124 may form a space in which the position fixation part 400 may be seated on the first body part 110 and the second body part 120. The position fixation part 400 may be seated on the first groove part 114 and the second groove part 124.

Referring FIG. 10, in the dummy assembly 10 according to an example aspect of the present disclosure, a portion of a plurality of fixation members 600 may penetrate the first fixation hole 421, and the fixation member 600 which penetrates the first fixation hole 421 may be coupled to the first coupling hole 115 which is provided to the first groove part 114. In other words, the first groove part 114 may provide the first coupling hole 115 so that the fixation member 600 which penetrates the first fixation hole 421 is coupled thereto. Also, another portion of the plurality of fixation members 600 may penetrate the second fixation hole 422, and the fixation member 600 which penetrates the second fixation hole 422 may be coupled to the second coupling hole 125 which is provided to the second groove part 124. In other words, the second groove part 124 may provide the second coupling hole 125 so that the fixation member 600 which penetrates the second fixation hole 422 is coupled thereto.

Referring to FIG. 11, at least one of the first groove part 114 and the second groove part 124 on which the position fixation part 400 is seated may include an extended space E that is a space extended further in a direction in which the first body part 110 or the second body part 120 has moved. The distance between the first body part 110 and the second body part 120 may be adjusted by the distance adjustment part 300, and through this, coping with a difference between standards required for various products is allowed. The coping with the difference between the standards may be further facilitated by providing the extended space E.

Meanwhile, in the dummy assembly 10 according to an example aspect of the present disclosure, at least a portion of the plurality of fixation holes 420 may be a buffer hole 423. The buffer hole 423 may include a buffer space 423s provided so that a portion of the fixation member 600 which penetrates the position fixation part 400 and is semi-coupled to the first body part 110 or the second body part 120 is to move. Specifically, the buffer hole 423 may include the buffer space 423s provided so that the portion of the fixation member 600 which penetrates the position fixation part 400 and is semi-coupled to the first coupling hole 115 or the second coupling hole 125 is to move.

After the distance between the first body part 110 and the second body part 120 is adjusted through the distance adjustment part 300, in order to fix positions thereof, the position fixation part 400 may be fixed with the fixation member 600. Here, the fixation member 600 which passes through the fixation hole 420 of the position fixation part 400 may be coupled to the first coupling hole 115 or the second coupling hole 125, but may not be completely coupled thereto. In this state, the buffer hole 423 may provide the buffer space 423s which is a spare space so that the non-completely coupled fixation member 600 may move, and the fixation member 600 may be minutely adjusted so that the position fixation part 400 is seated and fixed at a further accurate position. When minute adjustment of the fixation member 600 is completed, the fixation member 600 may be completely coupled to the first coupling hole 115 or the second coupling hole 125 not to move. Here, being completely coupled may be a state in which the fixation member 600 begins to be coupled to the first coupling hole 115 or the second coupling hole 125 and the fixation member 600 may not move any further.

The buffer space 423s may be provided so that the portion of the semi-coupled fixation member 600 is to move in a direction in which the first body part 110 or the second body part 120 has moved. As described above, the first body part 110 and the second body part 120 may move through the distance adjustment part 300, and the buffer space 423s may be provided so that the portion of the semi-coupled fixation member 600 which penetrates the buffer hole 423 is to move in the direction in which the first body part 110 or the second body part 120 has moved. A direction in which the distance adjustment part 300 may move the first body part 110 or the second body part 120 may be determined in advance, and the buffer space 423s may be provided in consideration thereof.

Meanwhile, at least a portion of the first fixation holes 421 may be the buffer hole 423, and at least a portion of the second fixation holes 422 may be the buffer hole 423. As a specific example, referring to FIGS. 9 through 11, all the second fixation holes 422 may be the buffer hole 423.

The dummy assembly 10 according to an example of the present disclosure may be widely applied to an electric vehicle, a battery charging station, and another field of green technology using a battery such as solar power generation and wind power generation. Also, the dummy assembly 10 according to an example of the present disclosure may be applied to an eco-friendly electric vehicle, hybrid vehicle, or the like that suppresses air pollution and greenhouse gas emission to prevent climate change.

The various exemplary aspects of the present disclosure have been described above in detail, but the scope of the present disclosure is not limited thereto. It will be apparent to those skilled in the art that various changes and modifications may be allowed within the scope of the technical spirit of the present disclosure. In addition, the above-described exemplary aspects may be implemented without a portion of elements thereof, and each of the exemplary aspects may be implemented in combination with another.

## Claims

1. A dummy assembly for inspecting weld strength between a lead tab and a busbar of a battery cell, the dummy assembly comprising:
a first body part to which a first lead tab dummy and a first busbar assembly are mounted, the first busbar assembly comprising a first busbar, at least a portion of the first busbar configured to be welded to the first lead tab dummy;
a second body part to which a second lead tab dummy and a second busbar assembly are mounted, the second busbar assembly comprising a second busbar, at least a portion of the second busbar provided to be welded to the second lead tab dummy; and
a distance adjustment part configured to adjust a distance between the first body part and the second body part.

2. The dummy assembly of claim 1, wherein the distance adjustment part includes a driving part configured to move the first body part or the second body part.

3. The dummy assembly of claim 2, wherein the driving part includes:
a first driving member connected with the first body part;
a second driving member connected with the second body part; and
a rotation member connected with the first driving member and the second driving member and provided to rotate.

4. The dummy assembly of claim 3, wherein
the rotation member is mutually fixed to the first driving member and the second driving member,
the first driving member is fastened to the first body part in a rotatable manner, and
the second driving member is fastened to the second body part in a rotatable and translationally movable manner.

5. The dummy assembly of claim 4, wherein the first driving member and the second driving member are formed as a single shaft.

6. The dummy assembly of claim 4, wherein
a protruding rib is formed to the first driving member, and
a screw thread is formed to the second driving member.

7. The dummy assembly of claim 3, wherein
the first body part includes a first body connection member provided to face one surface on which the first busbar assembly is mounted,
the second body part includes a second body connection member provided to face one surface on which the second busbar assembly is mounted, and
the first body connection member and the second body connection member face each other.

8. The dummy assembly of claim 2, wherein the distance adjustment part further comprises a guide part configured to guide movement by the driving part.

9. The dummy assembly of claim 8, wherein
the first body part comprises a first body connection member provided to face one surface on which the first busbar assembly is mounted,
the second body part comprises a second body connection member provided to face one surface on which the second busbar assembly is mounted, and
the distance adjustment part is connected with the first body connection member and the second body connection member.

10. The dummy assembly of claim 9, wherein the distance adjustment part comprises a plurality of guide parts, and
the driving part is provided between the plurality of guide parts.

11. The dummy assembly of claim 1, wherein
the first body part comprises a first body hole configured to mount the first lead tab dummy, and
the second body part comprises a second body hole configured to mount the second lead tab dummy.

12. The dummy assembly of claim 1, wherein the first body part includes:
a first body fixation part configured to mount the first busbar assembly,
the second body part includes:
a second body fixation part configured to mount the second busbar assembly,
the first busbar assembly further includes a first busbar assembly fixation part provided to be coupled to or uncoupled from the first body fixation part, and
the second busbar assembly further includes a second busbar assembly fixation part provided to be coupled to or uncoupled from the second body fixation part.

13. The dummy assembly of claim 12, wherein
the first busbar assembly includes a first busbar frame of which the first busbar assembly fixation part is configured at one side to support the first busbar,
the second busbar assembly includes a second busbar frame of which the second busbar assembly fixation part is configured at one side to support the second busbar,
wherein the first busbar frame includes a first groove guide part on at least one side, and
the second busbar frame includes a second groove guide part on at least one side.

14. The dummy assembly of claim 1, further comprising:
a position fixation part configured to maintain a distance between the first body part and the second body part,
wherein the position fixation part is coupled to the first body part and the second body part by being penetrated by a fixation member.

15. The dummy assembly of claim 14, wherein the position fixation part includes:
a body member; and
a plurality of fixation holes that are penetration holes provided to the body member,
a portion of the plurality of fixation holes is a first fixation holes provided to be coupled to the first body part, and
another portion of the plurality of fixation holes is a second fixation hole provided to be coupled to the second body part.

16. The dummy assembly of claim 15, wherein
the first body part includes a first groove part provided at one side end,
the second body part includes a second groove part provided at one side end and facing the first groove part, and
the position fixation part is seated on the first groove part and the second groove part.

17. The dummy assembly of claim 16, wherein
the distance adjustment part is configured to move at least one of the first body part or the second body part, and
at least one of the first groove part and the second groove part on which the position fixation part is seated includes an extended space extended further in a direction in which the first body part or the second body part has moved.

18. The dummy assembly of claim 16, wherein
the fixation member is present as a plurality of fixation members,
a portion of the plurality of fixation members is configured to penetrate the first fixation hole and coupled to a first coupling hole provided to the first groove part, and
another portion is configured to penetrate the second fixation hole and coupled to a second coupling hole provided to the second groove part.

19. The dummy assembly of claim 15, wherein at least a portion of the plurality of fixation holes is a buffer hole, andthe buffer hole includes a buffer space provided so that a portion of the fixation member which penetrates the position fixation part and is semi-coupled to the first body part and the second body part is to move.

20. The dummy assembly of claim 19, wherein the distance adjustment part is configured to move at least one of the first body part or the second body part, and the buffer space is configured so that the portion of the semi-coupled fixation member is to move in a direction in which the first body part or the second body part moves.
